Europäisches Patentamt

European Patent Office

Office européen des brevets

(11) Publication number: **0 206 813**
**B1**

## (12) EUROPEAN PATENT SPECIFICATION

(45) Date of publication of patent specification: **04.01.89**

(51) Int. Cl.⁴: **F 16 L 37/28,** F 16 L 29/00

(21) Application number: **86304883.1**

(22) Date of filing: **24.06.86**

(54) **Coupler device for fluid systems.**

(30) Priority: **28.06.85 US 749846**

(43) Date of publication of application:
**30.12.86 Bulletin 86/52**

(45) Publication of the grant of the patent:
**04.01.89 Bulletin 89/01**

(84) Designated Contracting States:
**DE FR GB IT SE**

(56) References cited:
**DE-A-3 509 476**
**DE-B-1 249 029**
**US-A-3 874 411**

(73) Proprietor: **PARKER HANNIFIN CORPORATION**
**17325 Euclid Avenue**
**Cleveland Ohio 44112 (US)**

(72) Inventor: **Johnson, Lyle R.**
**1037 Hampshire Avenue North**
**Minneapolis Minnesota 55427 (US)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to coupler devices for fluid systems, and has particular, though not exclusive, application to rigid mount, breakaway, quick couplers having a flow-check feature therein.

Devices of this kind are well known in the art. However, there are disadvantages with most of these because of the mode of operation and the varied applications which the coupler encounters. Some of the prior art devices are directed to the agricultural environment wherein the coupler is mounted on a tractor for receiving fluid from the control valve of the tractor and for coupling with the hose nipple of a hydraulic implement to be actuated by the fluid power source. Often this implement is a closed fluid system so that the nipple is presented to the coupler under fluid pressure. In this even, accommodation must be made for the different mechanical interconnection which occurs and the subsequent opening of the closed fluid valve of the nipple to a full open flow condition.

Most of the couplers of this kind which rely on a spring to hold the nipple valve open are subject to an undesirable characteristic called flow-checking. Flow-checking occurs when a surge of oil moves from nipple to coupler with sufficient force to overcome the coupler valve spring and allow the nipple valve to close and check the flow of oil. Mechanically actuated stops have been proposed in the past to prevent flow-checking.

One example of a prior art valve is shown in US—A—4 200 121 wherein a mechanical stop is provided to produce the flow-checking feature. The stop is in the form of a pin which is spring loaded in the direction of its locking position and which co-operates with the stem of the coupler valve support member to control the flow-check movement of the coupler valve. A sleeve is provided on the stem and is axially movable relative thereto for resetting the stop pin by means of a ramp surface on one edge of the sleeve. Resetting of the coupler occurs upon disengagement of the nipple and leaves it in a position of preparedness for the next engagement cycle. A second embodiment of coupler is described in this specification wherein a flow responsive vane provides rotary movement, against the action of a torsion spring, to actuate a detent cam for locking co-operation with the detent contour of the valve support stem.

Another prior art device employs a mechanical stop to prevent flow-checking. This stop is in the form of a hairpin spring in a right angle bend, where the legs of the pin straddle the valve stem under control of a shiftable sleeve and are spread by a ramp surface for resetting purposes.

A problem with the latter design is that the stop device is not actuated if the connecting nipple is not under pressure. In this instance the valve stem moves back only a short distance and does not cause shifting of the sleeve relative to the valve stem. Consequently, the nipple can flow-check. However, when flow-checking does occur, the coupler valve stem will move the full required distance wherein the sleeve separates from a shoulder on the stem and allows the stop to engage to prevent further flow-checking.

A still further form of prior art structure is shown in US—A—4 398 561 wherein a mechanical stop co-operates with the coupler valve support stem to provide flow-checking. In this arrangement, however, the stop is activated by the flow of fluid through the coupler whereby a sleeve is moved to force locking balls into engagement with the stem. This type of design is subject to flow conditions and is dependent to some extent upon fluid viscosity and the like.

According to the invention there is provided a quick coupler for fluid interconnections, comprising a housing having a bore therein,

a body member axially movable in the housing bore between an outer, disconnect position and an inner coupled position,

detent means for releasably retaining the body member in the inner and outer positions,

locking means co-operable between the body member and the housing for releasably securing a nipple in the body member,

a valve and a valve seat in the body member for preventing fluid flow therethrough, valve support means movable with and mounting the valve for axial movement relative to the body member,

a spring outwardly biasing the valve support means and the valve to a closed position,

an elongate member on the valve support means extending toward the inner end of the body member, and

stop means at the inner end of the body member movable between a radially inner position and a radially outer position, respectively into and out of the path of movement of the elongate member for preventing and allowing rearward movement of the elongate member and thereby of the valve member,

characterised in that the stop means comprises.

a radially disposed stop support slidably mounted at the inner end of the body member for axial movement with the body member between an inner position and an outer position and for radial movement relative to the body member, the stop support being disposed in a larger bore of the housing in the inner position and in a smaller bore of the housing in the outer position,

a taper surface on the housing between the larger bore and the smaller bore,

a stop member on the support mounted for movement with the support and to be positioned in and out of the path of movement of the elongate member when the stop support is positioned respectively in the larger bore and the smaller bore of the housing, and

spring means biasing the stop support toward the surfaces of the larger bore and the smaller bore and the taper surface of the housing.

The coupler of the invention is particularly suitable for use as an agricultural quick coupler since it allows connection of a nipple under hydraulic pressure. The coupler is preferably of the rigid mount type which means that it can be mounted directly on a tractor control valve or connected to it with rigid piping. An arrangement of seals and chambers inside the coupler can allow the transfer of oil which permits the internal movement of a body member therein relative to the outer housing, which is necessary to connect and disconnect the nipple. The coupler allows for breakaway without damage in the event of an accidental disconnect of the implement from the tractor.

Preferably the housing is a generally cylindrical housing having a threaded bore at one end for connection to a tractor control valve and the relatively movable inner body member carries locking balls which co-operate with the housing to secure or release the nipple.

Preferably the stop support is a pin disposed in radial bores in the body member and the stop member is mounted on the pin between the bores.

The spring means biases the stop member against one end of the support pin and thus the support pin against the housing bore so that the stop member is moved by camming engagement with the housing into or out of the path of movement of the support pin for the coupler valve. The relative movement between the body member and housing is controlled by the detent means which provides a releasable grip on the inner body member in two positions. The detent means can be overcome by outward axial force to move the body member to an outer position automatically to disengage the locking balls for release of the nipple.

The invention is diagrammatically illustrated by way of example with reference to the accompanying drawings, in which:—

Figure 1 is a view in cross section of a coupler valve according to the invention with a nipple partially inserted therein and the coupler valve in an open position;

Figure 2 is a cross sectional view of the coupler valve of Figure 1 with the nipple inserted therein and with a body member shifted to a fully inward position;

Figure 3 is a cross sectional view of the coupler valve of Figures 1 and 2 with the nipple inserted therein and with the coupler and nipple valves returned to full open positions;

Figure 4 is a cross sectional view of the coupler valve of Figures 1 to 3 showing the coupler valve in the closed position;

Figure 5 is an enlarged cross sectional view of a stop member for the coupler valve of Figures 1 to 4; and

Figure 6 is an enlarged bottom view of the stop member of Figure.

Referring to the drawings, these show different stages of the coupling action of a coupler valve 10 which comprises an outer cylindrical housing 11 and an inner cylindrical body member 12, axially slidable relative to the housing 11 and having a bore which can receive a nipple 14. The nipple 14 is typically connected to some form of agricultural implement by means of a flexible hydraulic fluid line and is the termination for coupling to the coupler valve 10. In turn, the housing 11 of the coupler valve 10 comprises a two part housing with the inner housing having a threaded bore 15 at one end which is intended for connection directly to a control valve or to a rigid conduit on a tractor. The bore 15 leads into a larger recessed bore 16, an intermediate taper section 18 and a smaller bore 19. The axially outer part of the housing 11 includes a multi-stepped bore 20 for receipt of the body member 12.

The body member 12 is a two part member with the two parts threaded together for common movement by threads 21 and is capable of axial sliding movement relative to the housing 11 in the housing bore 20. Various chambers are created between the housing 11 and the body member 12 by means of the multi-stepped configurations of the outer surface of the body member 12 and the inner surface of the bore 20 of the housing 11 and which are sealed by o-ring seals 22. These provide equal volume chambers such that upon axial movement of the body member 20, no differential fluid displacement occurs and no differential fluid forces are developed. For a further description of the particulars of this kind of coupler valve 10, reference should be made to EPA 0 113 206 (833074479) which describes a similar breakaway fluid coupler valve having relatively movable inner and outer housing and body members.

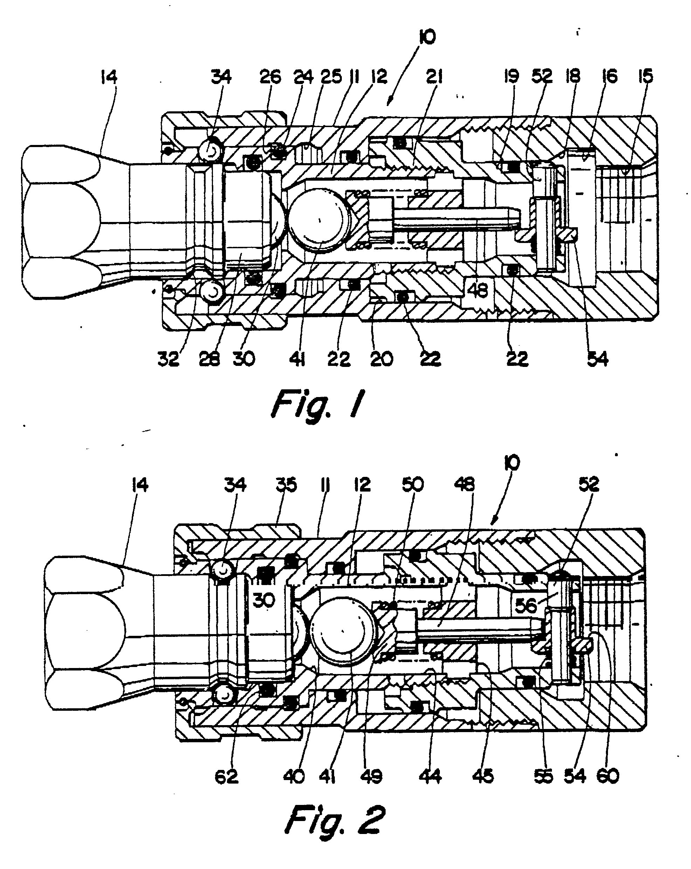

The body member 12, while supported for axial sliding movement in the housing 11, is retained in an inner or outer position with respect thereto by means of a detent device comprising a snap ring 24 secured in a groove in the body member 12 and co-operating with axially inner and outer grooves 25, 26 in the housing 11. The grooves 25, 26 are axially adjacent one another, but are spaced a distance apart to provide sufficient movement of the body member 12 with respect to the housing 11 to achieve locking engagement with the nipple 14, and operation of the valves therein. The body member 12 is shown in Figure 1 in its outer position with the snap ring 24 in the outer groove 26 and is readily movable to the groove 25 by means of sufficient force axially applied to the outer end of the body member 12 to cause compression of the snap ring 24 and shifting from groove to groove. Likewise, a similar operation obtains upon outwardly directed axial force being applied to the body member 12 which as will be described in greater detail hereinafter provides the breakaway feature of the coupling valve 10.

The nipple 14 is a conventional quick connect type nipple comprising a cylindrical nose portion 28 having a bore therein with a spring loaded nipple valve 30 biased to a closed position against a nipple valve seat therein. The nipple 14 further includes a groove 32 on its outer periphery adjacent the nose portion 28 for locking purposes.

Locking means comprising a plurality of circularly disposed balls 34 are received in a plurality of radial slots in the outer portion of the body member 12 and are cammed radially inwardly of the slots by engagement with the outer portion of the housing 11 as the body member 12 is moved inwardly of the housing 11. As best seen in Figure 2, the balls 34 are then cammed inwardly into the groove 32 of the nipple valve 14 and secured by the housing 11 in a manner well understood in the art. A collar 35 is provided outwardly of the housing 11 and fixed to the body member 12, providing a means for manually grasping the body member 12 for movement thereof between inner and outer positions.

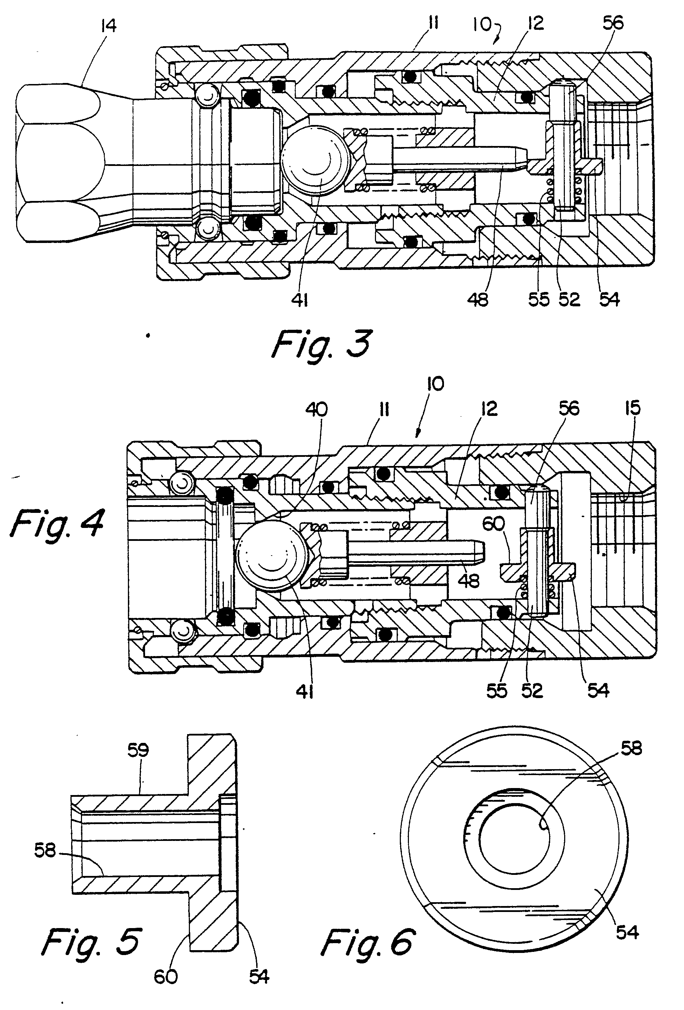

A coupler valve seat 40 is formed on the inner periphery of the body member 12 and co-operates with a coupler valve 41 which in the illustrated embodiment is a ball valve member for closing and opening an inner bore 44 in the body member 12. A circular strut 45, open to fluid flow therethrough, is clamped in the body member 12 between the inner and outer parts thereof adjacent the threads 21 and includes an axial bore therein in which a valve support pin 48 is received for axial sliding movement relative to the body member 12. The support pin 48 includes a cup 49 at its outer end for partially receiving the ball valve 41 and is biased to an outward position by means of a spring 50 acting between the strut 45 and a flange on the cup 49. Thus, the valve 41 can typically be urged against the coupler valve seat 40 to a closed position as shown in Figure 4 in the absence of other influences and serves to close the inner bore 44 of the body member 12 against fluid flow therethrough. The valve spring 50 has a spring rate about twice as strong as the spring rate of the nipple valve 30 such that in the absence of other influences, the coupler valve 41 will urge the nipple valve 30 to an open, full flow, position, the nipple valve 30 being limited to a maximum open position by a mechanical stop therein (not shown). This full flow position of the coupler valve 10 is best depicted in Figure 3, wherein it will be noted the outermost edge of the coupler valve 41 is spaced from the inner periphery of the coupler valve seat 40, providing a relatively large open space thereabout for full flow through the valve seat 40.

The stop means for preventing flow-checking of the coupler valve 41 comprises a cylindrical stop pin 52, a stop member 54 and a spring 55, which co-operate with the inner end of the valve support pin 48. The stop pin 52 includes an enlarged cylindrical head 56 at one end thereof and is received in opposed cross bores in the body member 12 at the innermost end thereof, placing the stop pin 52 in a radial disposition and in alignment with the valve support pin 48. The stop member 54 is a disc, better seen in enlarged detail in Figures 5 and 6, having a central bore 58 extending through an elongate hub 59 and slidably receiving a stop pin 52. The hub 59 of the stop member 54 is urged against the enlarged head 56 of the stop pin 52 by means of the spring 55 surrounding the pin 52 and located between the inner periphery of the body member 12 and a recessed surface in the lower face of the stop member 54. An upper face 60 of the stop member 54 is flat and serves to engage the side of the innermost end of the valve support pin 48 as shown in Figure 2, for retaining the stop member 54 against the bias of the spring 55 in a position out of the path of movement of the valve support pin 48. Thus, it will be seen that the stop member 54 is urged by the spring 55 in an upward direction as viewed in the drawings, together with the stop pin 52 so that the enlarged head 56 of the stop pin 52 engages the larger bore 16, the taper section 18 or the smaller bore 19 of the housing 11, unless restrained as indicated in Figure 2 by the inner end of the valve support pin 48. The head 56 of the pin 52 is domed to facilitate movement from surface to surface and the camming action of the pin 52.

When the body member 12 is in its outermost position as depicted in Figure 1, the stop pin 52 is in engagement with the smaller bore 19, placing the stop member 54 out of the axial path of movement of the valve support pin 48. In Figure 3 the body member 12 is shown in its innermost position with the stop pin 52 in engagement with the larger bore 16 of the housing 11 placing the stop member 54 in the path of movement of the valve support pin 48, thereby preventing further inward movement, or movement to the right, of the valve support pin 48 or the coupler valve 41. As the body member 12 is moved outwardly from its innermost position, the enlarged head 56 of the stop pin 52 moves along the taper surface 18 thereby compressing the spring 55 and allowing the stop pin 52 to be received in the smaller bore 19 in the position depicted in Figure 1.

In operation and with reference to Figure 1 where the initial stage of the coupling of nipple 14 to coupler valve 10 is depicted, the nose 28 of the nipple 14 is in engagement with a fluid seal 62 located in a groove in the outer portion of the body member 12. The nipple valve 30 is pressurized and held in its outermost position as depicted in the usual condition of operation, thereby forcing the coupler valve 41 from its valve seat 40 to the position shown, moving also therewith the valve support pin 48 against the bias of the spring 50. In this condition of the coupler valve 10, the body member 12 is in its outermost position with the snap ring 24 disposed in the outer groove 26 thereby also placing the stop pin 52 in engagement with the smaller bore 19 of the housing 11, with the stop member 54 thus in a lower position and outer of the path of movement of the valve support pin 48.

Continued inward insertion of the nipple 14 is depicted in Figure 2, wherein the locking balls 34 have started to engage the groove 32 thereby initiating inward movement of the body member 12 against the resistance of the snap ring 24. With such inner movement to the position depicted in Figure 2, the inner end of the valve support pin 48 passes over the upper surface 60 of the stop member 54 thereby preventing further radial movement of the stop member 54 or stop pin 52.

At the end position depicted, the locking balls 34 are fully received in the groove 32 and secured by the housing 11, with the body member 12 moved to the position wherein the snap ring 24 is engaged in the inner groove 25. As noted, since the body member 12 is in its innermost position, the stop pin 52 has been moved to the location of the larger bore 16 in the housing 11 but is prevented from engagement therewith by the engagement of the stop member 54 with the inner end of the valve support pin 48. As pressure is equalized in the coupler valve 10, when the flow control valve (not shown) on the tractor, for example, coupled to the inlet bore 15 is opened, the nipple valve 30 is mechanically urged only by the coupler valve 41 and since the coupler valve spring 50 is of a greater spring rate, it moves the nipple valve 30 and the coupler valve 41 to the full open position depicted in Figure 3. Upon such movement of the coupler valve 41 to the left as viewed in Figure 3, the valve support pin 48 is moved therewith under the urging of the spring 50 so that the inner end thereof is disengaged from the upper surface 60 of the stop pin 52 allowing the stop member 54 to move upwardly under the urging of the spring 55 to a position adjacent the end of the valve support pin 48, or in the path of return movement thereof. During such movement the stop pin 52 is moved to a position where the enlarged head 56 thereof is in engagement with the larger bore 16 of the housing 11. By this arrangement the stop member 54 is positioned to block any movement of the valve pin 48 back into the coupler thereby providing a positive means to prevent flow-checking.

In the event that a nipple 14 presented to coupler valve 10 is not under pressure when connected, the internal arrangement of the coupler valve 10 will be as depicted in Figure 3 wherein both the coupler valve 41 and the nipple valve 30 are open and the stop member 54 is in a position to prevent flow-checking. The stop member 54 has moved to the position of the larger bore 16 of the housing 11 by inward movement together with the body member 12, but since the coupler valve 41 has not been retracted inwardly together with the valve support pin 48, the stop member 54 and the stop pin 52 are free to move radially under the urging of the spring 55 to the position depicted in Figure 3.

Figure 4 is a depiction of the disconnected position of the coupler valve 10 wherein the nipple 14 has moved the body member 12 through the interengagement between the locking balls 34 and against the bias of the detent snap ring 24 to the position where the snap ring 24 is engaged in the outermost groove 26. The stop pin 52 is carried with the body member 12 against the taper section 18 into the smaller bore 19 of the housing 11, thereby forcing the stop member 54 downwardly against the spring 55 so that the upper surface 60 of the stop member 54 is out of the path of movement of the valve support pin 48, in preparation for receipt of the nipple 14 as described with respect to Figure 1. There is no need to provide alignment means between the stop member 54 and the stop pin 52 as the stop member is symmetrical and may be oriented in any position on the stop pin 52.

The stop member 54 is shown in the form of a disc which requires no specific orientation on the pin 52, but other devices could be used which, for example, might have a bore to receive the inner end of the valve support pin 48. A device such as this, however, would have to be appropriately keyed so that the bore thereof was always presented to the support pin 48.

## Claims

1. A quick coupler for fluid interconnections, comprising a housing (11) having a bore (20) therein,

a body member (12) axially movable in the housing bore (20) between an outer, disconnect position and an inner coupled position,

detent means (24, 25, 26) for releasably retaining the body member (12) in the inner and outer positions,

locking means (34) co-operable between the body member (12) and the housing for releasably securing a nipple (14) in the body member (12),

a valve (41) and a valve seat (40) in the body member (12) for preventing fluid flow therethrough, valve support means (49) movable with and mounting the valve (41) for axial movement relative to the body member,

a spring (50) outwardly biasing the valve support means (49) and the valve (41) to a closed position,

an elongate member (48) on the valve support means (49) extending toward the inner end of the body member (12), and

stop means at the inner end of the body member movable between a radially inner position and a radially outer position, respectively into and out of the path of movement of the elongate member (48) for preventing and allowing rearward movement of the elongate member (48) and thereby of the valve member (41),

characterised in that the stop means comprises,

a radially disposed stop support (52) slidably mounted at the inner end of the body member (12) for axial movement with the body member between an inner position and an outer position and for radial movement relative to the body member, the stop support (52) being disposed in a larger bore (16) of the housing (11) in the inner position and in a smaller bore (19) of the housing (11) in the outer position,

a taper surface (18) on the housing (11) between the larger bore (16) and the smaller bore (19),

a stop member (54) on the support (52) mounted for movement with the support and to be positioned in and out of the path of movement of the elongate member (48) when the stop support is positioned respectively in the larger bore (16) and the smaller bore (19) of the housing, and

spring means (55) biasing the stop support toward the surfaces of the larger bore (16) and the smaller bore (19) and the taper surface (18) of the housing.

2. A quick coupler according to claim 1, wherein the coupler is a rigid mount coupler and the housing (11) is stationary.

3. A quick coupler according to claim 1 or claim 2, wherein the coupler is a breakaway coupler, the locking means being disengaged in the outer position and the detent means (24, 25, 26) being effective automatically to release the body member (12) for movement to the outer position upon axial outward urging of the body member.

4. A quick coupler according to any one of claims 1 to 3, wherein the stop support is a pin (52) disposed in radial bores in the body member (12) and the stop member (54) is mounted on the pin (52) between the bores.

5. A quick coupler according to claim 4, wherein the stop member (54) is slidably mounted on the pin (52) against an abutment (56) thereon and is biased against the abutment (56) by the spring means (55).

6. A quick coupler according to claim 5, wherein the stop member (54) is a disc having a flat upper surface (60) and a central bore (58) in which the support pin (52) is received, the upper surface (60) and the periphery of the disc being engageable with the elongate member (48) to prevent, respectively, radial movement of the stop member (54) and axial movement of the elongate member (48).

**Patentansprüche**

1. Schnellkupplung für Verbindungsleitungen für flüssige oder gasförmige Medien, mit einem eine Innenbohrung (20) aufweisenden Gehäuse (11),

mit einem in der Gehäusebohrung (20) zwischen einer äußeren Entkupplungsstellung und einer inneren Kupplungsstellung bewegbaren Innenkörper (12),

mit einer Sperreinrichtung (24, 25, 26) zum lösbaren Arretieren des Innenkörpers (12) in der Innenstellung und der Außenstellung,

mit einer Rasteinrichtung (34), die mit dem Innenkörper (12) un dem Gehäuse zusammenwirkt, um einen Nippel (14) lösbar in dem Innenkörper (12) festzuhalten,

mit einem Ventil (41) und einem Ventilsitz (40) in dem Innenkörper (12) zum Verhindern eines Fluiddurchflusses, einem mit dem Ventil (41) bewegbaren und das Ventil (41) haltenden Ventilträger (49) zur Ausführung von Axialbewegungen gegenüber dem Innenkörper,

mit einer Feder (50), die den Ventilträger (49) und das Ventil (41) in eine Schließstellung nach außen zu drücken sucht, mit einem an den Ventilträger (49) anschließenden, zum Innenende des Innenkörpers (12) hin gerichteten langgestreckten Bauteil (48) und

mit einer Anschlagseinrichtung am Innenende des Innenkörpers, die sich in eine radial innere Position bzw. eine radial äußere Position in die Bewegungsbahn des langgestreckten Bauteils (48) bzw. aus dieser Bewegungsbahn heraus verlagern läßt, um die Rückwärtsbewegung des langgestreckten Bauteils (48) und damit des Ventils (41) zu verhindern bzw. zu ermöglichen, dadurch gekennzeichnet, daß die Anschlagseinrichtung umfaßt

einen radial angeordneten Anschlagträger (52), der am Innenende des Innenkörpers (12) zusammen mit dem Innenkörper zwischen einer Innenstellung und einer Außenstellung axial bewegbar und gegenüber dem Innenkörper radial bewegbar ist, wobei der Anschlagträger (52) sich in der Innenstellung in einer weiteren Bohrung (16) des Gehäuses (11) und in der Außenstellung in einer engeren Bohrung (19) des Gehäuses (11) befindet,

eine an dem Gehäuse (11) zwischen der weiteren Bohrung (16) und der engeren Bohrung (19) verlaufende konische Fläche (18),

ein an dem Träger (52) angeordnetes, mit diesem bewegbares Anschlagsteil (54), welches in die Bewegungsbahn des langgestreckten Bauteils (48) einführbar bzw. aus dieser Bahn herausnehmbar ist, wenn der Anschlagsträger sich in der weiteren Bohrung (16) bzw. der engeren Bohrung (19) des Gehäuses befindet, und

ein Federelement (55), das den Anschlagträger in Richtung auf die Oberfläche der weiteren Bohrung (16) und der engeren Bohrung (19) und die konische Fläche (18) des Gehäuses zu drücken sucht.

2. Schnellkupplung nach Anspruch 1, dadurch gekennzeichnet, daß die Kupplung eine Festmontagekupplung ist und das Gehäuse (11) unbeweglich ist.

3. Schnellkupplung nach Anspruch 1 oder 2, dadurch gekennzeichnet, daß die Kupplung eine Abreißkupplung ist, und daß die Rasteinrichtung in der Außenstellung außer Eingriff ist und die Sperreinrichtung (24, 25, 26) bei axial nach außen gerichtetem Druck des Innenkörpers (12) diesen automatisch zur Bewegung in die Außenstellung freigibt.

4. Schnellkupplung nach einem der Ansprüche 1 bis 3, dadurch gekennzeichnet, daß der Anschlagträger als in Radialbohrungen des Innenkörpers (12) angeordneter Stift (52) ausgebildet ist, und daß das Anschlagsteil (54) auf dem Stift (52) zwischen den Bohrungen angebracht ist.

5. Schnellkupplung nach Anspruch 4, dadurch gekennzeichnet, daß das Anschlagsteil (54) auf dem Stift (52) gleitend gegen ein darauf befindliches Widerlager (56) verschiebbar ist und durch das Federelement (55) gegen das Widerlager (56) vorgespannt ist.

6. Schnellkupplung nach Anspruch 5, dadurch gekennzeichnet, daß das Anschlagsteil (54) als Scheibe mit ebener Oberseite (60) und einer Mittelbohrung (58) ausgebildet ist, in die der Tragstift (52) aufgenommen ist, und daß die Oberseite (60) bzw. der Rand der Scheibe in Eingriff mit dem langgestreckten Teil (48) bringbar sind, um eine Radialbewegung des Anschlagsteils (54) bzw. eine Axialbewegung des langgestreckten Teils (48) zu verhindern.

## Revendications

1. Raccord rapide pour raccordements de fluides, comportant un carter (11) percé d'un alésage (20),

—un élément de corps (12) pouvant se déplacer axialement dans l'alésage de carter (20) entre une position extérieure de séparation et une position intérieure de raccordement,

—des moyens de détente (24, 25, 26) pour retenir de manière amovible l'élément de corps (12) dans les positions intérieure et extérieure,

—des moyens de verrouillage (34) pouvant coopérer entre l'élément de corps (12) et le carter pour fixer de manière amovible un embout (14) dans l'élément de corps (12),

—une soupape (41) et un siège de soupape (40) placés dans l'élément de corps (12) pour empêcher le débit de fluide de passer à travers celui-ci, des moyens de support de soupape (49) pouvant se déplacer avec la soupape (41) et servant de monture à celle-ci pour qu'elle puisse se déplacer axialement par rapport à l'élément de corps,

—ressort (50) poussant les moyens de support de soupape (49) vers l'extérieur et la soupape (41) vers une position de fermeture,

—un élément allongé (48) formé sur les moyens de support de soupape (49) et s'étendant vers l'extrémité intérieure de l'élément de corps (12), et

—des moyens de butée placés à l'extrémité intérieure de l'élément de corps et pouvant se déplacer entre une position radialement intérieure et une position radialement extérieure, pour venir respectivement dans le passage et hors du passage de l'élément allongé (48) de manière à empêcher et permettre respectivement le mouvement vers l'arrière de l'élément allongé (48) et par conséquent de l'élément de soupape (41), caractérisé en ce que les moyens de butée comprenent:

—un support de butée disposé radialement (52) se montant en glissement à l'extrémité intérieure de l'élément de corps (12) pour se déplacer axialement avec l'élément de corps entre une position intérieure et une position extérieure et pour se déplacer radialement par rapport à l'élément de corps, le support de butée (52) étant disposé dans un alésage plus grand (16) du carter (11) dans la position intérieure, et dans un alésage plus petit (19) du carter (11) dans la position extérieure,

—une surface conique (18) formée sur le carter (11) entre l'alésage plus grand (16) et alésage plus petit (19),

—un élément de butée (54) prévu sur le support (52) monté pour se déplacer avec le support et pour se placer dans le chemin de passage et hors du chemin de passage de l'élément allongé (48) lorsque le support de butée est placé respectivement dans l'alésage plus grand (16) et dans l'alésage plus petit (19) du carter, et

—des moyens de ressort (55) poussant le support de butée vers les surfaces de l'alésage plus grand (16) et de l'alésage plus petit (19) et vers la surface conique (18) du carter.

2. Raccord rapide selon la revendication 1, caractérisé en ce que ce raccord est un raccord à monture rigide et en ce que le carter (11) est fixe.

3. Raccord rapide selon l'une quelconque des revendications 1 et 2, caractérisé en ce que ce raccord est un raccord à détachement, les moyens de verrouillage étant dégagés dans la position extérieure et les moyens de détente (24, 25, 26) fonctionnant automatiquement pour libérer l'élément de corps (12) de façon qu'ils puissent se déplacer vers la position extérieure sous la poussée axiale dirigée vers l'extérieur de l'élément de corps.

4. Raccord rapide selon l'une quelconque des revendications 1 à 3, caractérisé en ce que le support de butée est une broche (52) disposée dans des alésages radiaux de l'élément de corps (12), et en ce que l'élément de butée (54) est monté sur la broche (52) entre les alésages.

5. Raccord rapide selon la revendication 4, caractérisé en ce que l'élément de butée (54) est monté en glissement sur la broche (52) contre une butée (56) formée sur celle-ci, et se trouve poussé contre la butée (56) par les moyens de ressorts (55).

6. Raccord rapide selon la revendication 5, caractérisé en ce que l'élément de butée (54) est un disque présentent une surface supérieure plate (60) et un alésage central (58) dans lequel vient se loger la broche de support (52), la surface supérieure (60) et le pourtour du disque pouvant s'engager contre l'élément allongé (48) pour empêcher respectivement le mouvement radial de l'élément de butée (54) et le mouvement axial de l'élément allongé (48).

Fig. 1

Fig. 2

Fig. 3

Fig. 4

Fig. 5

Fig. 6